(19) **Europäisches Patentamt**
**European Patent Office**
**Office européen des brevets**

(11) **EP 2 169 962 A1**

(12) **EUROPEAN PATENT APPLICATION**
published in accordance with Art. 153(4) EPC

(43) Date of publication:
**31.03.2010 Bulletin 2010/13**

(51) Int Cl.:
**H04N 7/50** *(2006.01)*

(21) Application number: **08791042.8**

(22) Date of filing: **10.07.2008**

(86) International application number:
**PCT/JP2008/062484**

(87) International publication number:
**WO 2009/011279 (22.01.2009 Gazette 2009/04)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **17.07.2007 JP 2007185374**

(71) Applicant: **Nippon Telegraph and Telephone Corporation**
**Chiyoda-ku**
**Tokyo 100-8116 (JP)**

(72) Inventors:
• **SHIMIZU, Atsushi**
**Musashino-shi**
**Tokyo 180-8585 (JP)**
• **NAKAJIMA, Yasuyuki**
**Musashino-shi**
**Tokyo 180-8585 (JP)**

(74) Representative: **Ilgart, Jean-Christophe et al**
**Brevalex**
**3, rue du Docteur Lancereaux**
**75008 Paris (FR)**

(54) **VIDEO ENCODING DEVICE AND METHOD, VIDEO ENCODING PROGRAM, AND RECORDING MEDIUM CONTAINING THE PROGRAM**

(57)     A video encoding apparatus and a corresponding method for applying orthogonal transformation to a prediction error signal between a video signal of an encoding target area and a predicted signal for the video signal, and quantizing an obtained orthogonal transformation coefficient by using a preset quantization step size so as to encode the coefficient. A prediction error power which is a power of the prediction error signal is computed. For input information such as the computed prediction error power, the preset quantization step size, and an upper limit of an amount of code generated for the encoding target area, it is determined whether or not an amount of code generated when performing quantization using the preset quantization step size exceeds the upper limit. An encoding process is changed based on a result of the determination.

**FIG. 1**

## Description

TECHNICAL FIELD

The present invention relates to a video encoding apparatus and a corresponding method for applying orthogonal transformation to a prediction error signal between a video signal of an encoding target area and a predicted signal thereof, and quantizing an obtained orthogonal transformation coefficient by using a quantization step size so as to encode the coefficient, and also relates to a video encoding program used for implementing the video encoding apparatus and a storage medium which stores the program. In particular, the present invention relates to a video encoding apparatus and a corresponding method, which do not require re-encoding or encoding which handles two or more encoding modes and implement encoding which generates codes less than an upper limit amount of code, a video encoding program used for implementing the video encoding apparatus, and a storage medium which stores the program.
Priority is claimed on Japanese Patent Application No. 2007-185374, filed July 17, 2007, the contents of which are incorporated herein by reference.

BACKGROUND ART

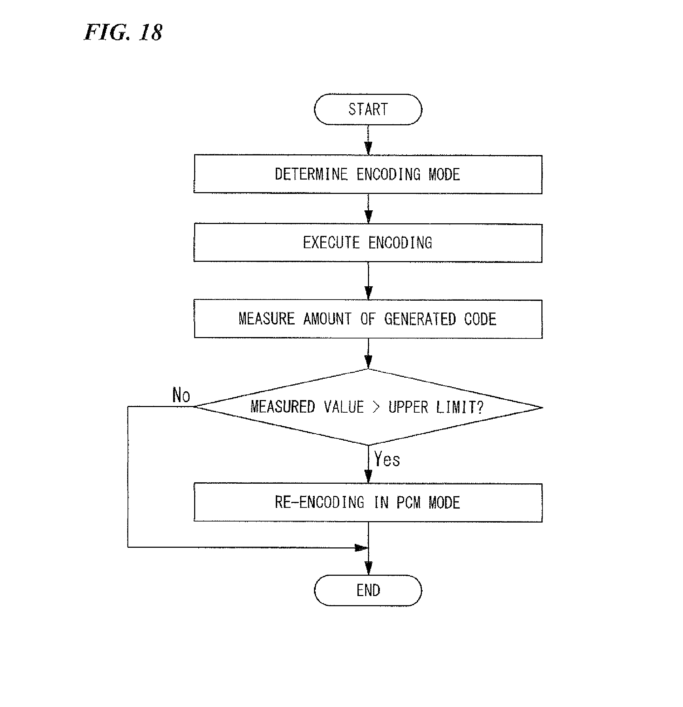

In H.264 as an international coding standard, the upper limit amount of code for one macroblock is determined (see, for example, Non-Patent Document 1).
Therefore, a video encoding apparatus based on H.264 should perform encoding in a manner such that the amount of generated code generated for one macroblock does not exceed the above upper limit amount.
In order to implement the above condition, the amount of generated code is measured after encoding, and if the measured amount exceeds the upper limit, encoding should be again performed with revised encoding conditions.
However, in such a method, the amount of computation or the processing time increases due to re-encoding with revised encoding conditions.
In a proposed method for solving the above problem, encoding processes (orthogonal transformation, quantization, information source encoding, and the like) corresponding to two or more encoding modes to which different encoding conditions are assigned are simultaneously executed, and one which produces an encoding result whose amount of generated code does not exceed the relevant upper limit is selected.
However, in such a method, encoding processes corresponding to two or more encoding modes having different encoding conditions should be simultaneously executed, and an encoding result whose amount of generated code does not exceed the upper limit is not always obtained.
Therefore, in order to reliably encode each macroblock of any input image with a number of bits less than an upper limit, H.264 employs a pulse code modulation (PCM) mode in which the pixel value is directly transmitted without compression (i.e., without quantization).
In a conventional technique using the above, as shown in Fig. 18, encoding is executed after determining the encoding mode, and the amount of code generated in the encoding is measured. If the measured value exceeds an upper limit, re-encoding is performed in the PCM mode.
On the other hand, in comparison with a conventional encoding method using a coding table, an arithmetic coding method employed in H.264 has a feature such that the amount of code cannot be instantaneously measured.
Therefore, an excess over the upper limit number of bits may be detected after the processing of the next macroblock is started. In such a situation, a problem occurs in that there is a delay in a pipeline operation (i.e., parallel execution).
Accordingly, in a hardware device for performing a pipeline operation for macroblocks (as units), if an input image of a macroblock whose number of bits exceeds an upper limit is re-encoded in the above-described PCM mode, an additional memory is necessary for storing the input image until the encoding reaches the final stage.
Therefore, in a currently-proposed technique (see, for example, Non-Patent Document 2) relating to hardware devices for performing pipeline operation for macroblocks as units, when there is a macroblock whose number of bits exceeds an upper limit, not the input image of the macroblock but a local decoded image thereof in the relevant encoder is re-encoded in the PCM mode.
Non-Patent Document 1: ITU-T Rec.H.264, "Advanced video coding for generic audio visual services", pp. 249-256, 2003.
Non-Patent Document 2: Keiichi Chono, Yuzo Senda, Yoshihiro Miyamoto, "A PCM coding method using decoded images for obeying the upper limit on the number of bits of MB in H.264 encoding", pp. 119-120, PCSJ2006.

DISCLOSURE OF INVENTION

Problem to be Solved by the Invention

As described above, in a video encoding apparatus based on H.264, encoding should be performed in a manner such that the amount of code generated for one macroblock is within a specific upper limit. In order to implement this condition, the amount of generated code is measured after an encoding process, and if the amount of generated code exceeds a specific upper limit, re-encoding may be performed with revised encoding conditions.
However, in such a method, the amount of computation or the processing time increases due to re-encoding with revised encoding conditions.

In a proposed method for solving the above problem, encoding processes corresponding to two or more encoding modes to which different encoding conditions are assigned are simultaneously executed, and the one which produces an encoding result whose amount of generated code does not exceed the relevant upper limit is selected.

However, in such a method, encoding processes corresponding to two or more encoding modes having different encoding conditions should be simultaneously executed, and an encoding result whose amount of generated code does not exceed the upper limit is not always obtained.

Therefore, in the conventional technique as shown in the above-referenced Fig. 18, encoding is performed after determining the encoding mode, and the amount of code generated in the encoding is measured. If the measured value exceeds an upper limit, re-encoding is performed in the PCM mode.

However, in the above conventional technique, even when the amount of generated code can be reduced in comparison with the re-encoding in the PCM mode, such a possibility is disregarded.

Furthermore, the arithmetic coding method employed in H.264 has a feature such that the amount of code cannot be instantaneously measured, and thus a processing delay occurs in a hardware device which executes a pipeline operation.

In light of the above circumstances, an object of the present invention is to provide a novel image encoding technique which does not require re-encoding or encoding corresponding to two or more encoding modes, and implements an encoding whose amount of generated code does not exceed an upper limit without awaiting a measured result of the amount of generated code.

Means for Solving the Problem

In order to achieve the object, the present invention provides a video encoding apparatus for applying orthogonal transformation to a prediction error signal between a video signal of an encoding target area and a predicted signal for the video signal, and quantizing an obtained orthogonal transformation coefficient by using a preset quantization step size so as to encode the coefficient. The apparatus comprises:

(1) a computation device that computes a prediction error power which is a power of the prediction error signal;
(2) a determination device that receives the prediction error power computed by the computation device, the preset quantization step size to be used in the relevant encoding, and an upper limit of an amount of code generated for the encoding target area, and determines whether or not an amount of code generated when performing quantization using the quantization step size to be used in the encoding exceeds the upper limit; and
(3) a change device that changes an encoding process based on a result of the determination by the determination device.

In the above structure, the determination device may estimate, based on the prediction error power computed by the computation device and the quantization step size to be used in the encoding, an amount of code generated when performing the quantization using the quantization step size to be used in the encoding, and compares the estimated amount with the upper limit so as to determine whether or not the amount of code generated when performing the quantization using the quantization step size to be used in the encoding exceeds the upper limit.

The determination device may compute a permissive power for the prediction error power computed by the computation device, based on the upper limit of the amount of generated code and the quantization step size to be used in the encoding, and compares the permissive power with the prediction error power computed by the computation device so as to determine whether or not the amount of code generated when performing the quantization using the quantization step size to be used in the encoding exceeds the upper limit.

If the determination device determines that the amount of code generated when performing quantization using the quantization step size to be used in the encoding exceeds the upper limit, the change device may not encode a quantized value of the orthogonal transformation coefficient, but may encode the video signal without quantizing the video signal.

Also, if the determination device determines that the amount of code generated when performing quantization using the quantization step size to be used in the encoding exceeds the upper limit, the change device obtains a quantization step size, which is computed based on the prediction error power (computed by the computation device) and the upper limit of the amount of generated code and implements generation of the amount of code which does not exceed the upper limit, and switches the quantization step size from the quantization step size to be used in the encoding to the obtained quantization step size.

The above-described processing devices can also be implemented by a computer program. Such a computer program may be provided by storing it in an appropriate computer-readable storage medium, or by means of a network, and can be installed and operate on a control device such as a CPU so as to implement the present invention.

Generally, amount G of generated code and quantization step size Q have the following relationship:

$$G = X/Q$$

where X is a value depending on the input signal.

In addition, for the same quantization step size Q, there is a correlation between the amount G of generated code and power D of the input signal. Therefore, in the selection of the prediction mode used in the encoding, a mode for minimizing the prediction error power is selected.

In accordance with the above relationships, an approximate amount of generated code can be estimated.

The video encoding apparatus is provided in consideration of the above. In a typical example, a prediction error power which is a power of the prediction error signal (as an encoding target) is computed. Based on the computed prediction error power and the quantization step size to be used in the encoding, an amount of code generated when performing the quantization using the quantization step size to be used in the encoding is estimated. The estimated value is compared with the relevant upper limit of the amount of generated code, so as to determine whether or not the amount of code generated when performing quantization using the quantization step size to be used in the encoding exceeds the upper limit.

In the above determination process, the amount of generated code is directly estimated. However, the determination process is equivalent to a process for determining whether or not the prediction error power is within a permissive power range defined based on the upper limit of the amount of generated code.

Therefore, in the video encoding apparatus of the present invention, a permissive power for the prediction error power may be computed based on the upper limit of the amount of generated code and the quantization step size to be used in the encoding, and the permissive power may be compared with the computed prediction error power so as to determine whether or not the amount of code generated when performing the quantization using the quantization step size to be used in the encoding exceeds the upper limit.

The estimated value for the amount of generated code or the permissive power for the prediction error power, which is used in the determination process, can be easily computed by means of a function or a table.

That is, it is possible to estimate the amount of generated code by setting variables of a function, which are the prediction error power and the quantization step size, to the values of the prediction error power and the quantization step size, where the value of the function is the relevant amount of generated code. It is also possible to estimate the amount of generated code by referring to a table in which a relationship between data values of the prediction error power, the quantization step size, and the relevant amount of generated code is defined.

It is also possible to compute the permissive power for the prediction error power by setting variables of a function, which are the upper limit of the amount of generated code and the quantization step size, to the values of the upper limit and the quantization step size, where the value of the function is the permissive power for the prediction error power. It is also possible to compute the permissive power for the prediction error power by referring to a table in which a relationship between data values of the upper limit of the amount of generated code, the quantization step size, and the permissive power for the prediction error power is defined.

Strictly speaking, different encoding modes (prediction modes) have different overhead amounts of code or the like, and such a function or look-up table depends on the encoding mode. Therefore, it is preferable that such a function or look-up table is provided for each encoding mode, and one suitable for the encoding mode of the encoding target area is selected and used.

In the video encoding apparatus of the present invention, if it is determined by the above determination process that the amount of code generated when performing quantization using the quantization step size to be used in the encoding exceeds the upper limit, then (i) in a first example, a quantized value of the orthogonal transformation coefficient is not be encoded, but the video signal is encoded without quantizing the video signal; and (ii) in a second example, a quantization step size is obtained, which is computed based on the prediction error power and the upper limit of the amount of generated code and implements generation of the amount of code which does not exceed the upper limit, and the quantization step size is switched from the quantization step size to be used in the encoding to the obtained quantization step size.

The computation of the quantization step size used in the above switching operation is implemented using an inverse function of the function which is used for the above-described estimation of the amount of generated code. Therefore, also in this case, the relevant quantization step size can be easily computed using a function or a table.

That is, it is possible to compute the quantization step size which implements generation of the amount of code which does not exceed the upper limit, by setting variables of a function, which are the prediction error power and the upper limit of the amount of generated code, to the values of the prediction error power and the upper limit, where the value of the function is the quantization step size which implements the generation of the amount of code which does not exceed the upper limit.

It is also possible to compute the quantization step size which implements generation of the amount of code which does not exceed the upper limit of the amount of generated code, by referring to a table in which a relationship between data values of the prediction error power, the upper limit, and the quantization step size which implements the generation of the amount of code which does not exceed the upper limit is defined.

Strictly speaking, different encoding modes (prediction modes) have different overhead amounts of code or the like, and such a function or look-up table depends on the encoding mode. Therefore, it is preferable that such a function or look-up table is provided for each encoding mode, and one suitable for the encoding mode of the encoding target area is selected and used.

Effect of the Invention

As described above, the present invention can be applied to an apparatus for applying orthogonal transformation to a prediction error signal between a video signal of an encoding target area and a predicted signal for the video signal, and quantizing an obtained orthogonal transformation coefficient by using a quantization step size so as to encode the coefficient. The present invention can implement encoding which generates codes less than an upper limit amount of code, without measuring the amount of generated code. Therefore, the present invention does not require re-encoding or encoding which handles two or more encoding modes and can implement the encoding which generates codes less than the upper limit amount of code.

Additionally, As the present invention can implement an encoding whose amount of generated code does not exceed an upper limit without awaiting a measured result of the amount of generated code, no processing delay occurs in a hardware device which executes a pipeline operation.

BRIEF DESCRIPTION OF THE DRAWINGS

Fig. 1 is a diagram showing a video encoding apparatus as an embodiment of the present invention.
Fig. 2 is a diagram showing an example structure of the code amount estimator in the embodiment.
Fig. 3 is a diagram showing an example structure of the quantization step size computation unit in the embodiment.
Fig. 4 is a flowchart executed by the video encoding apparatus of the embodiment.
Fig. 5A is also a flowchart executed by the video encoding apparatus.
Fig. 5B is also a flowchart executed by the video encoding apparatus.
Fig. 6 is a diagram showing another example structure of the code amount estimator in the embodiment.
Fig. 7 is a flowchart executed by the video encoding apparatus employing the structure in Fig. 6.
Fig. 8A is also a flowchart executed by the video encoding apparatus.
Fig. 8B is also a flowchart executed by the video encoding apparatus.
Fig. 9 is a diagram showing a video encoding apparatus as another embodiment of the present invention.
Fig. 10 is a flowchart executed by the video encoding apparatus of the embodiment.
Fig. 11 is another flowchart executed by the video encoding apparatus of the embodiment.
Fig. 12 is a diagram showing an example structure of the generated code amount estimator.
Fig. 13 is a diagram showing another example structure of the generated code amount estimator.
Fig. 14 is a diagram showing an example structure of the permissive prediction error power computation unit.
Fig. 15 is a diagram showing another example structure of the permissive prediction error power computation unit.
Fig. 16 is a diagram showing an example structure of the quantization step size computation unit.
Fig. 17 is a diagram showing another example structure of the quantization step size computation unit.
Fig. 18 is a flowchart explaining a conventional technique.

Reference Symbols

10      structural part as an H.264 video encoding apparatus based on H.264
20      code amount estimator
21      quantization step size computation unit
22      selector switch
200     prediction error power computation unit
201     generated code amount estimator
202     code amount comparator
210     prediction error power computation unit
211     minimum quantization step size computation unit

BEST MODE FOR CARRYING OUT THE INVENTION

Below, the present invention will be explained in detail in accordance with embodiments thereof.

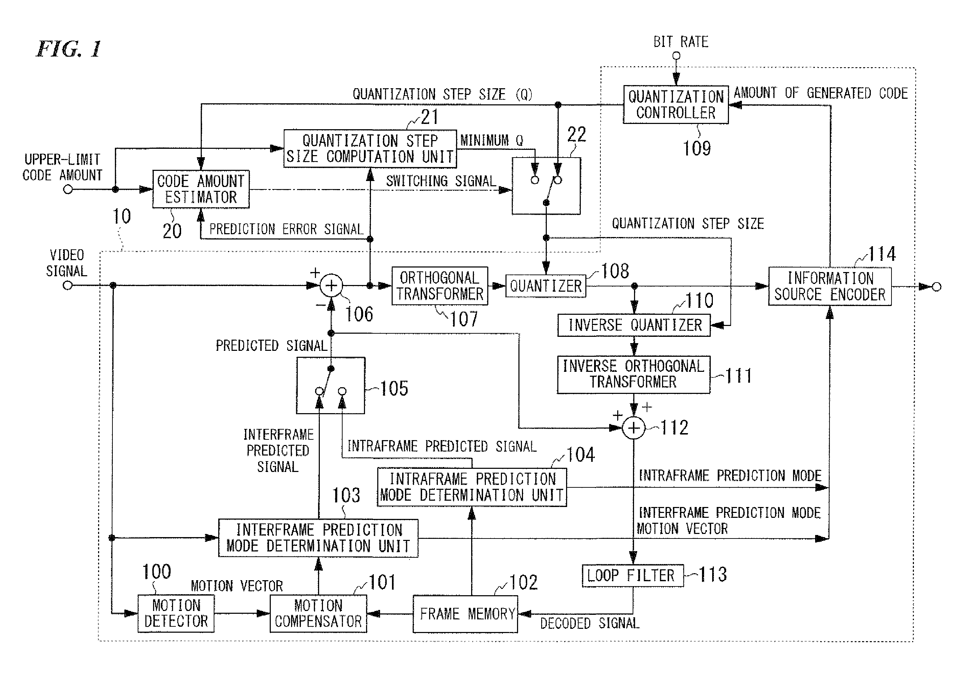

Fig. 1 shows a video encoding apparatus as an embodiment of the present invention.
In Fig. 1, reference numeral 10 indicates a structural part (surrounded by a dotted line) as an H.264 video encoding apparatus based on H.264, reference numeral 20 indicates a code amount estimator provided for implementing the present invention, reference numeral 21 indicates a quantization step size computation unit provided for implementing the present invention, and reference numeral 22 indicates a selector switch for implementing the present invention.
Similar to conventional video encoding apparatuses based on H.264, the part 10 as the H.264 video encoding apparatus includes a motion detector 100, a motion compensator 101, a frame memory 102, an interframe prediction mode determination unit 103, an intraframe prediction mode determination unit 104, a selector switch 105, a subtractor 106, an orthogonal transformer 107, a quantizer 108, a quantization controller 109, an inverse quantizer 110, an inverse orthogonal transformer 111, an adder 112, a loop filter 113, and an information source encoder 114. After the subtracter 106 generates a prediction error signal between a video signal of an encoding target macroblock and a predicted signal thereof, the orthogonal transformer 107 subjects the generated prediction error signal to orthogonal transformation. In accordance with the quantization step size set by the quantization controller 109, the quantizer 108 quantizes orthogonal transformation coefficients obtained by the orthogonal transformation. The information source encoder 114 subjects the quantized values to entropy encoding so as to encode the video signal.

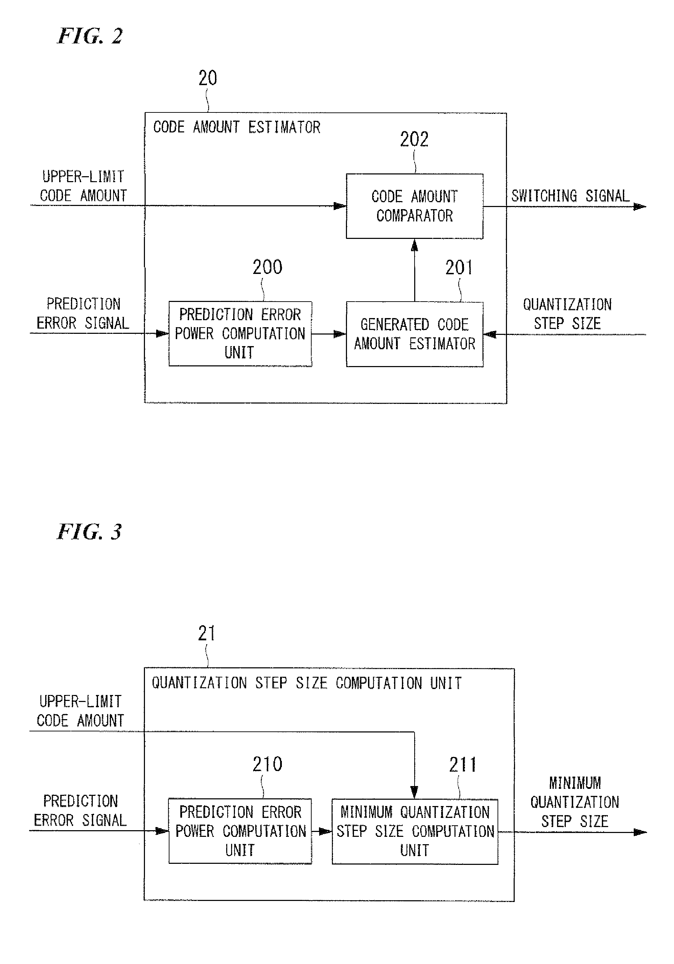

Fig. 2 shows an example structure of the code amount estimator 20.

The code amount estimator 20 receives an upper limit value of the amount of code generated for the relevant macroblock (i.e., an upper limit amount of code), the prediction error signal generated by the subtractor 106, and the quantization step size set by the quantization controller 109, and includes a prediction error (electric) power computation unit 200, a generated code amount estimator 201, and a code amount comparator 202.

The prediction error power computation unit 200 computes a prediction error power, which is a power of the prediction error signal generated by the subtractor 106.

Based on the prediction error power computed by the prediction error power computation unit 200 and the quantization step size set by the quantization controller 109, the generated code amount estimator 201 estimates an amount of code generated when quantizing the encoding target macroblock by the relevant quantization step size.

The code amount comparator 202 compares the estimated amount of generated code obtained by the generated code amount estimator 201 with the upper limit (defined in H.264) for the amount of code generated for the macroblock. If the estimated amount of generated code obtained by the generated code amount estimator 201 is greater than the upper limit for the amount of code generated for the macroblock, the code amount comparator 202 directs the selector switch 22 to switch the quantization step size supplied to the quantizer 108 from the quantization step size set by the quantization controller 109 to a quantization step size computed by the quantization step size computation unit 21. In contrast, if the estimated amount of generated code obtained by the generated code amount estimator 201 is smaller than or equal to the upper limit for the amount of code generated for the macroblock, the code amount comparator 202 directs the selector switch 22 to directly use the quantization step size set by the quantization controller 109 as the quantization step size supplied to the quantizer 108.

Fig. 3 shows an example structure of the quantization step size computation unit 21.

The quantization step size computation unit 21 receives the upper limit value of the amount of code generated for the relevant macroblock (i.e., the upper limit amount of code) and the prediction error signal generated by the subtractor 106, and includes a prediction error (electric) power computation unit 210 and a minimum quantization step size computation unit 211.

The prediction error power computation unit 210 computes a prediction error power, which is a power of the prediction error signal generated by the subtractor 106.

Based on the prediction error power computed by the prediction error power computation unit 210 and the upper limit of the amount of code generated for the macroblock, the minimum quantization step size computation unit 211 computes a quantization step size for implementing code amount generation which does not exceed the upper limit (i.e., a minimum quantization step size).

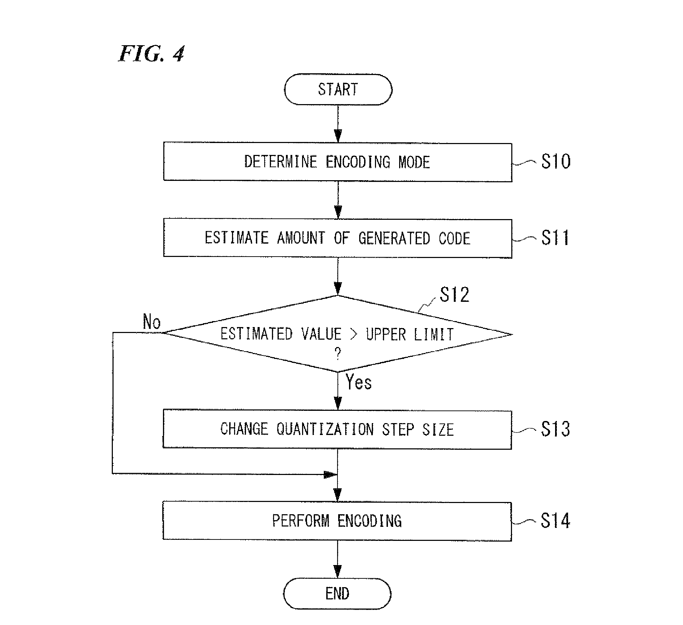

Figs. 4 to 5B show flowcharts executed by the video encoding apparatus of the present embodiment.

Based on the flowcharts, the operation of the video encoding apparatus in the present embodiment will be explained in detail.

As shown in the flowchart of Fig. 4, in the video encoding apparatus of the present embodiment, the encoding mode is determined in the first step S10. In the next step S 11, the amount of code generated when performing the encoding by using the currently-set quantization step size is estimated.

In the next step S12, it is determined whether or not the estimated amount of code generated for the relevant macroblock is greater than the upper limit defined therefor. If it is determined that the estimated amount is greater than the upper limit, the operation proceeds to step S 13, where the quantization step size is changed. In the next step S 14, encoding is performed using the newly-set quantization step size.

If it is determined in the determination of step S12 that the estimated amount is smaller than or equal to the upper limit, the operation directly proceeds to step S 14 by skipping step S13, and encoding is performed using the currently-set quantization step size.

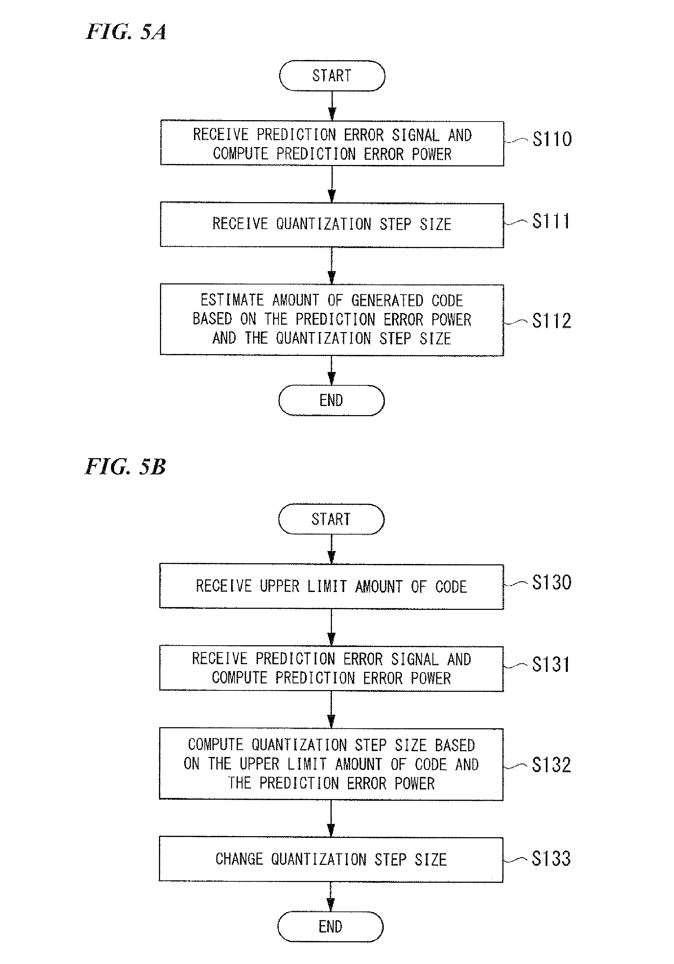

Fig. 5A is a flowchart of the process of estimating the amount of generated code in step S 11, and Fig. 5B is a flowchart of the process of changing the quantization step size in step S13.

As shown in the flowchart of Fig. 5A, in step S11, the prediction error signal is received so as to compute the prediction error power (see first step S110), and in the next step S111, the currently-set quantization step size is received. In the next step S112, based on the computed prediction error power and the received quantization step size, the amount of code generated when performing the encoding by using the currently-set quantization step size is estimated.

In the above-explained step S13, as shown in the flowchart of Fig. 5B, the upper limit value of the amount of code generated for the relevant macroblock (i.e., the upper limit amount of code) is received in the first step S30, and in the next step S131, the prediction error signal is received so as to compute the prediction error power. In the next step S 132, based on the received upper limit of the amount of generated code and the computed prediction error power, a quantization step size for implementing the code amount generation which does not exceed the upper limit is computed. In the next step S 133, in accordance with the computed quantization step size, the quantization step size used in the relevant encoding is changed.

Accordingly, the video encoding apparatus shown in Fig. 1 estimates the amount of code generated when performing the encoding using the currently-set quantization step size, based on a relationship between the amount of generated code and the quantization step size. If the estimated value is greater than the upper limit for the amount of code generated for the relevant macroblock, a quantization step size for implementing the code amount generation which does not exceed the upper limit is computed, and the quantization step size used in the encoding is changed to the computed value.

Therefore, in accordance with the video encoding apparatus of the present embodiment, re-encoding or encoding corresponding to two or more encoding modes is unnecessary, and an encoding whose amount of generated code does not exceed an upper limit can be implemented without awaiting a measured result of the amount of generated code.

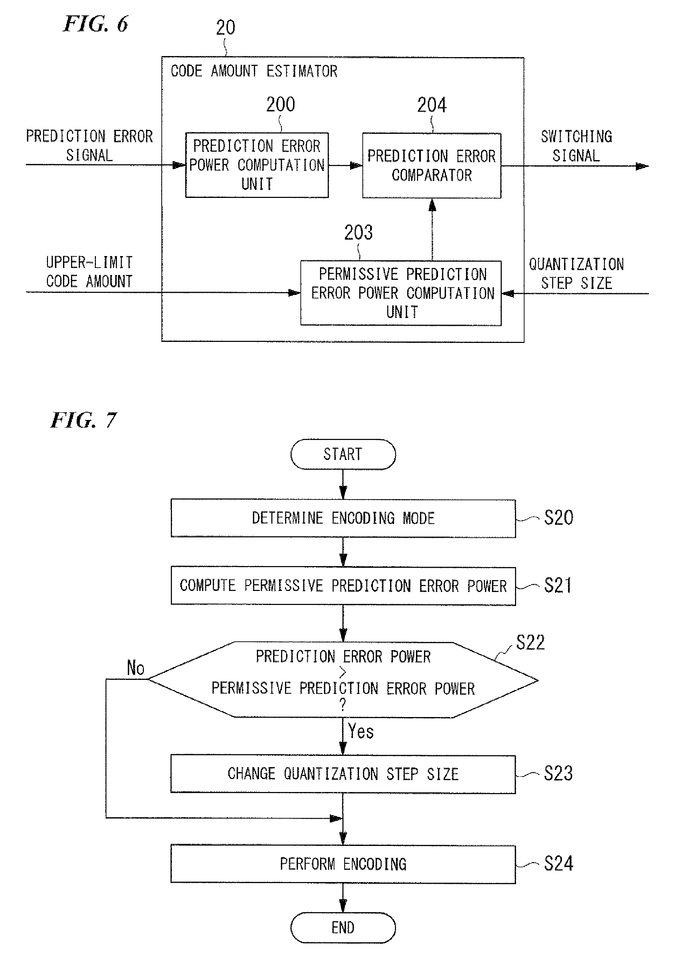

Fig. 6 shows another example structure of the code amount estimator 20.

When employing the shown structure, the code amount estimator 20 receives an upper limit value of the amount of code generated for the relevant macroblock (i.e., an upper limit amount of code), the prediction error signal generated by the subtractor 106, and the quantization step size set by the quantization controller 109, and includes a prediction error power computation unit 200, a permissive prediction error power computation unit 203, and a prediction error comparator 204.

The prediction error power computation unit 200 computes a prediction error power, which is a power of the prediction error signal generated by the subtractor 106.

The permissive prediction error power computation unit 203 computes a permissive power of the prediction error power (i.e., permissive prediction error power) based on the upper limit of the amount of code generated for the macroblock and the quantization step size set by the quantization controller 109.

The prediction error comparator 204 compares the prediction error power computed by the prediction error power computation unit 200 with the permissive prediction error power computed by the permissive prediction error power computation unit 203. If the prediction error power computed by the prediction error power computation unit 200 is larger than the permissive prediction error power computed by the permissive prediction error power computation unit 203, the prediction error comparator 204 directs the selector switch 22 to switch the quantization step size supplied to the quantizer 108 from the quantization step size set by the quantization controller 109 to a quantization step size computed by the quantization step size computation unit 21. In contrast, if the prediction error power computed by the prediction error power computation unit 200 is smaller than or equal to the permissive prediction error power computed by the permissive prediction error power computation unit 203, the prediction error comparator 204 directs the selector switch 22 to directly use the quantization step size set by the quantization controller 109 as the quantization step size supplied to the quantizer 108.

Figs. 7 to 8B show flowcharts executed by the video encoding apparatus of the present embodiment when the code amount estimator 20 has the structure as shown in Fig. 6.

Based on the flowcharts, the operation of the video encoding apparatus in this case will be explained in detail.

As shown in the flowchart of Fig. 7, when the code amount estimator 20 has the structure as shown in Fig. 6, the video encoding apparatus of the present embodiment determines the encoding mode in the first step S20. In the next step S21, the permissive prediction error power as a permissive power of the prediction error power is computed.

In the next step S22, it is determined whether or not the prediction error power is larger than the permissive prediction error power. If it is determined that the prediction error power is larger than the permissive power, the operation proceeds to step S23, where the quantization step size is changed. In the next step S24, encoding is performed using the newly-set quantization step size.

Although it is not shown in the flowchart of Fig. 7, when computing the permissive prediction error power in step S21, the prediction error power used in step S22 is also computed.

If it is determined in the determination of step S22 that the prediction error power is smaller than or equal to the permissive prediction error power, the operation directly proceeds to step S24 by skipping step S23, and encoding is performed using the currently-set quantization step size.

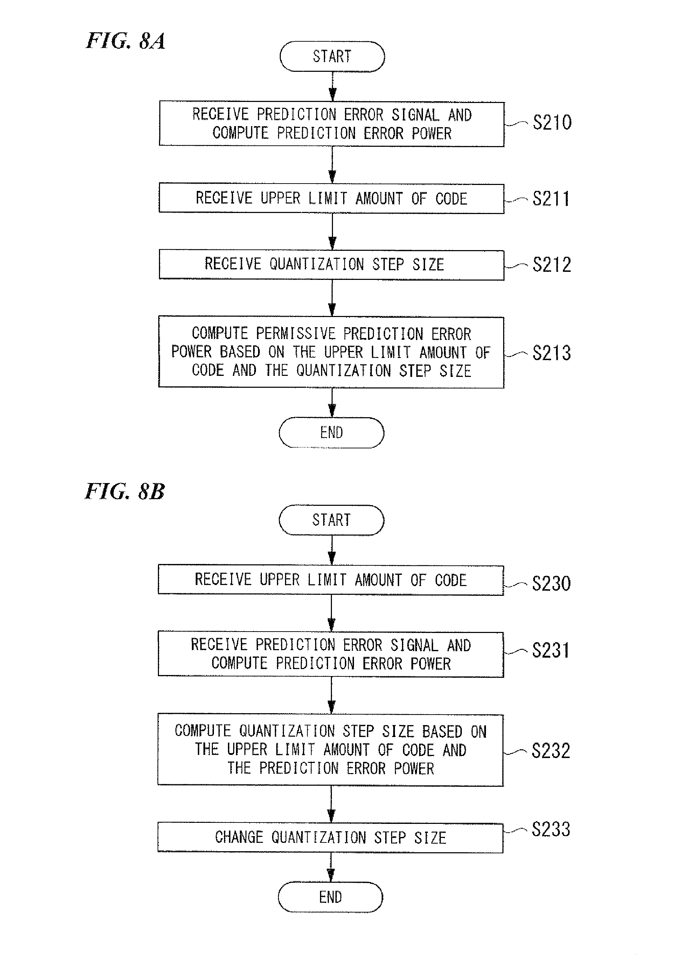

Fig. 8A is a flowchart of the process of computing the permissive prediction error power in step S21, and Fig. 8B is a flowchart of the process of changing the quantization step size in step S23.

As shown in the flowchart of Fig. 8A, in step S21, the prediction error signal is received so as to compute the prediction error power (see first step S210), and in the next step S211, the upper limit of the amount of code generated for the macroblock (i.e., the upper limit amount of code) is received. In the next step S212, the currently-set quantization step size is received, and in the next step S213, the permissive prediction error power is computed based on the received upper limit of the amount of generated code and the received quantization step size.

In the above-explained step S23, as shown in the flowchart of Fig. 8B, the upper limit value of the amount of code generated for the macroblock (i.e., the upper limit amount of code) is received in the first step S230, and in the next step S231, the prediction error signal is received so as to compute the prediction error power. In the next step S232, based on the received upper limit of the amount of generated code and the computed prediction error power, a quantization step size for implementing the code amount generation which does not exceed the upper limit is computed. In the next step S233, in accordance with the computed quantization step size, the quantization step size used in the relevant encoding is changed.

Accordingly, when the code amount estimator 20 has the structure shown in Fig. 6, the video encoding apparatus shown in Fig. 1 determines based on the permissive power of the prediction error power, which is derived by the upper limit of the amount of generated code and the quantization step size, whether or not the amount of code generated when performing the encoding by using the currently-set quantization step size exceeds the upper limit. If the relevant amount of generated code is greater than the upper limit, a quantization step size for implementing the code amount generation which does not exceed the upper limit is computed, and the quantization step size used in the encoding is changed to the computed value.

Therefore, in accordance with the video encoding apparatus of the present embodiment, re-encoding or encoding corresponding to two or more encoding modes is unnecessary, and an encoding whose amount of generated code does not exceed an upper limit can be implemented without awaiting a measured result of the amount of generated code.

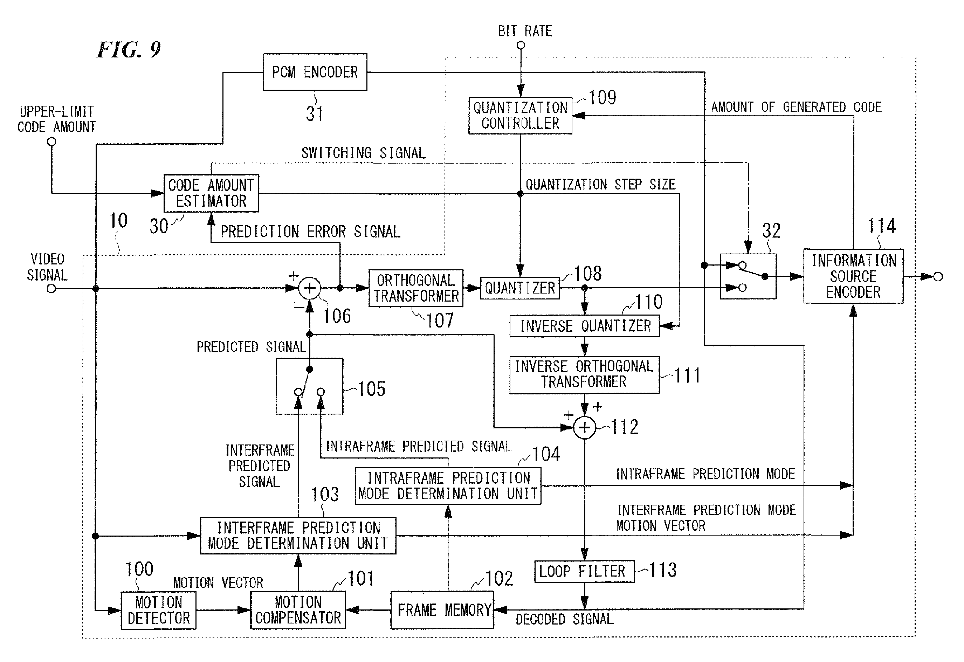

Fig. 9 shows another embodiment of the video encoding apparatus in accordance with the present invention. In Fig. 9, parts identical to those explained in Fig. 1 are given identical reference numerals.

In Fig. 9, reference numeral 10 indicates a structural part (surrounded by a dotted line) as an H.264 video encoding apparatus based on H.264, reference numeral 30 indicates a code amount estimator provided for implementing the present invention, reference numeral 31 indicates a PCM encoder provided for implementing the present invention, and reference numeral 32 indicates a selector switch for implementing the present invention.

The PCM encoder 31 subjects the relevant video signal as an encoding target to PCM encoding, without performing quantization, and outputs the encoded data via the selector switch 32 to the information source encoder 114.

The code amount estimator 30 has a basic structure identical to that of the code amount estimator 20 in the embodiment shown in Fig. 1, and may have a structure shown in Fig. 2. When having the structure shown in Fig. 2, if the estimated value of the amount of generated code is greater than the upper limit of the amount of generated code, the code amount estimator 30 directs the selector switch 32 to supply the signal output from the PCM encoder 31 to the information source encoder 114. In contrast, if the estimated value of the amount of generated code is smaller than or equal to the upper limit thereof, the code amount estimator 30 directs the selector switch 32 to supply the signal output from the quantizer 108 to the information source encoder 114.

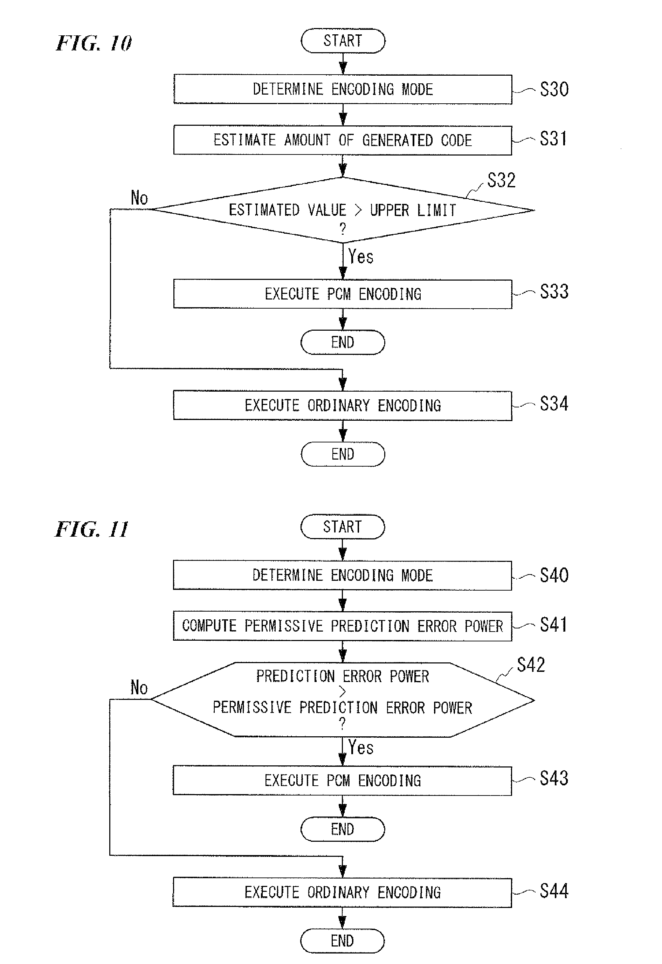

That is, as shown in a flowchart of Fig. 10, when the code amount estimator 30 has the structure shown in Fig. 2, the video encoding apparatus of the present embodiment first determines the encoding mode (see the first step S30). In the next step S31, the amount of code generated when performing the encoding using the currently set quantization step size is estimated. In the next step S32, it is determined whether or not the estimated amount of generated code is greater than the upper limit for the relevant amount of generated code. If it is determined that the estimated amount is greater than the upper limit, the operation proceeds to step S33, where the PCM encoding is executed. If it is determined that the estimated amount is smaller than or equal to the upper limit, the operation proceeds to step S34, where the ordinary encoding is executed.

The code amount estimator 30 may have the structure shown in Fig. 6. In such a case, if the prediction error power is higher than a permissive prediction error power, the code amount estimator 30 directs the selector switch 32 to supply a signal output from the PCM encoder 31 to the information source encoder 114. On the contrary, if the prediction error power is lower than or equal to the permissive prediction error power, the code amount estimator 30 directs the selector switch 32 to supply a signal output from the quantizer 108 to the information source encoder 114.

That is, as shown in a flowchart of Fig. 11, when the code amount estimator 30 has the structure shown in Fig. 6, the video encoding apparatus of the present embodiment first determines the encoding mode (see the first step S40). In the next step S41, a permissive prediction error power, as the permissive power for the prediction error power, is computed. In the next step S42, it is determined whether or not the prediction error power is higher than the permissive prediction error power. If it is determined that the prediction error power is higher than the permissive power, the operation proceeds to step S43, where the PCM encoding is executed. If it is determined that the prediction error power is lower than or equal to the permissive power, the operation proceeds to step S44, where the ordinary encoding is executed.

As described above, the video encoding apparatus of the present embodiment (see Fig. 9) determines whether or not the amount of code generated when encoding is executed using the currently set quantization step size exceeds an upper limit defined therefore. If the amount of generated code exceeds the upper limit, PCM encoding is executed without performing quantization.

Specifically, the code amount estimator 201 shown in Fig. 2, the permissive prediction error power computation unit 203 shown in Fig. 6, and the minimum quantization step size computation unit 211 shown in Fig. 3 each can be implemented using a function or a look-up table.

Strictly speaking, different prediction modes (encoding modes) have different overhead amounts of code or the like, and such a function or look-up table depends on the prediction mode. Therefore, it is preferable that such a function or look-up table is provided for each prediction mode, and one suitable for the prediction mode of the encoding target macroblock is selected and used.

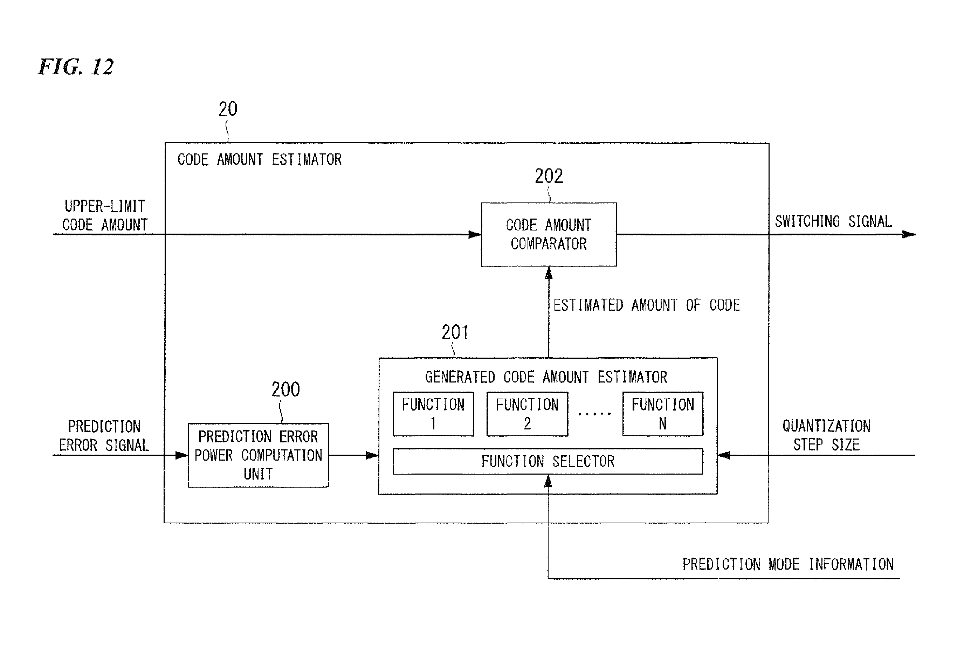

That is, in a preferable example shown in Fig. 12, the generated code amount estimator 201 in Fig. 2 has a plurality of functions (function 1 to function N) corresponding to a plurality of prediction modes, and one of the functions which is suitable for the prediction mode of the encoding target macroblock is selected and used.

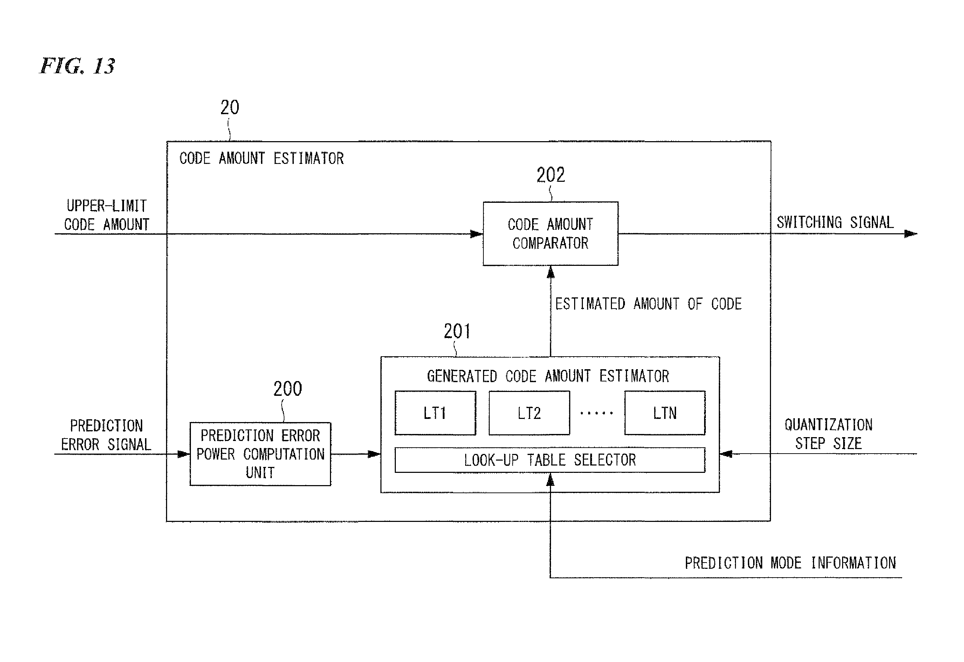

In another preferable example shown in Fig. 13, the generated code amount estimator 201 in Fig. 2 has a plurality of look-up tables (LT1 to LTN) corresponding to a plurality of prediction modes, and one of the look-up tables which is suitable for the prediction mode of the encoding target macroblock is selected and used.

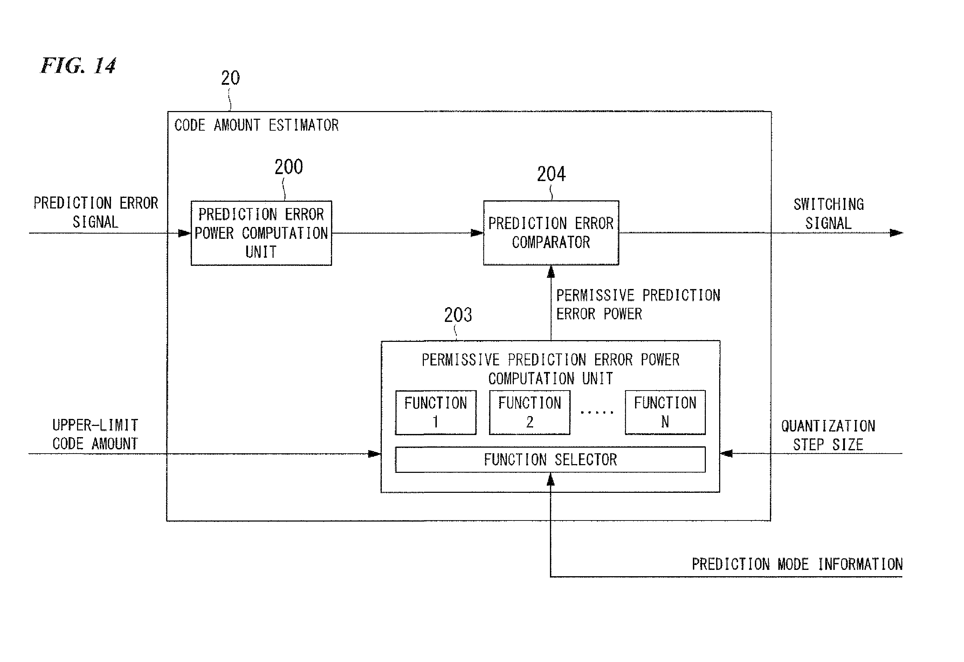

In another preferable example shown in Fig. 14, the permissive prediction error power computation unit 203 in Fig. 6 has a plurality of functions (function 1 to function N) corresponding to a plurality of prediction modes, and one of the functions which is suitable for the prediction mode of the encoding target macroblock is selected and used.

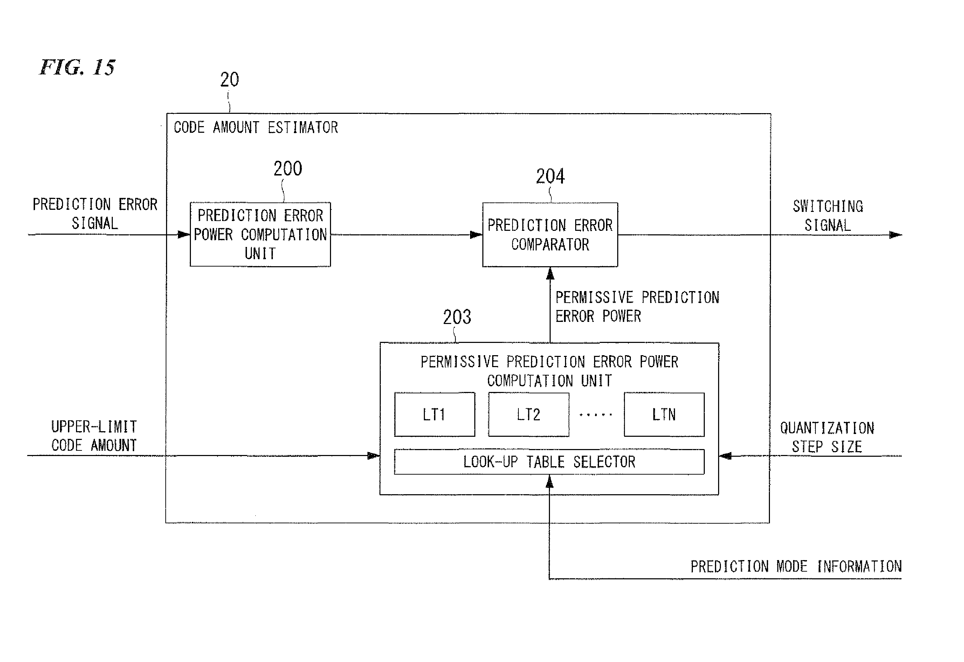

In another preferable example shown in Fig. 15, the permissive prediction error power computation unit 203 in Fig. 6 has a plurality of look-up tables (LT1 to LTN) corresponding to a plurality of prediction modes, and one of the look-up tables which is suitable for the prediction mode of the encoding target macroblock is selected and used.

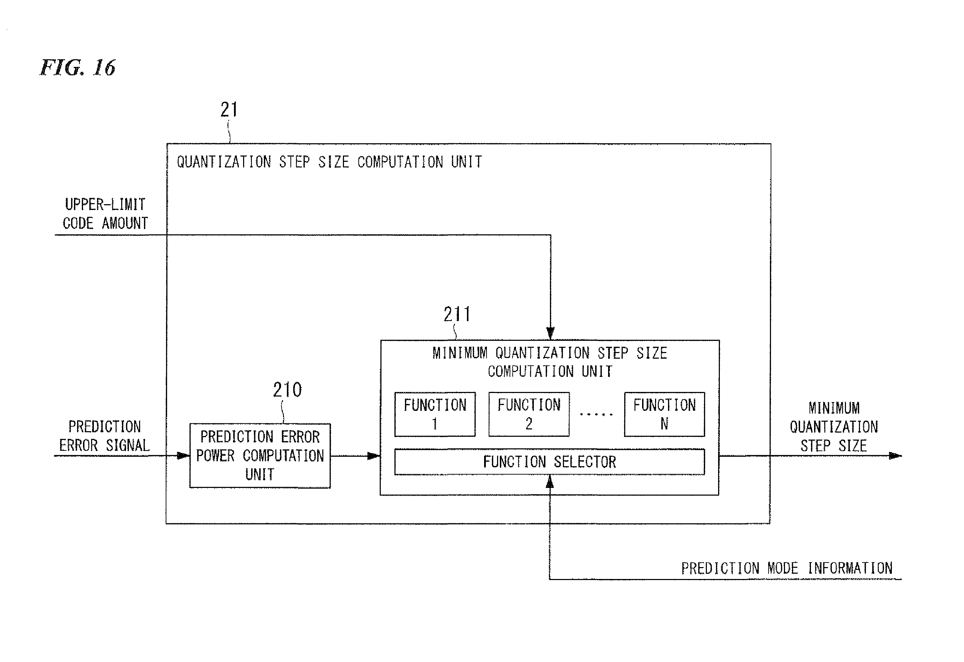

In another preferable example shown in Fig. 16, the minimum quantization step size computation unit 211 shown in Fig. 3 has a plurality of functions (function 1 to function N) corresponding to a plurality of prediction modes, and one of the functions which is suitable for the prediction mode of the encoding target macroblock is selected and used.

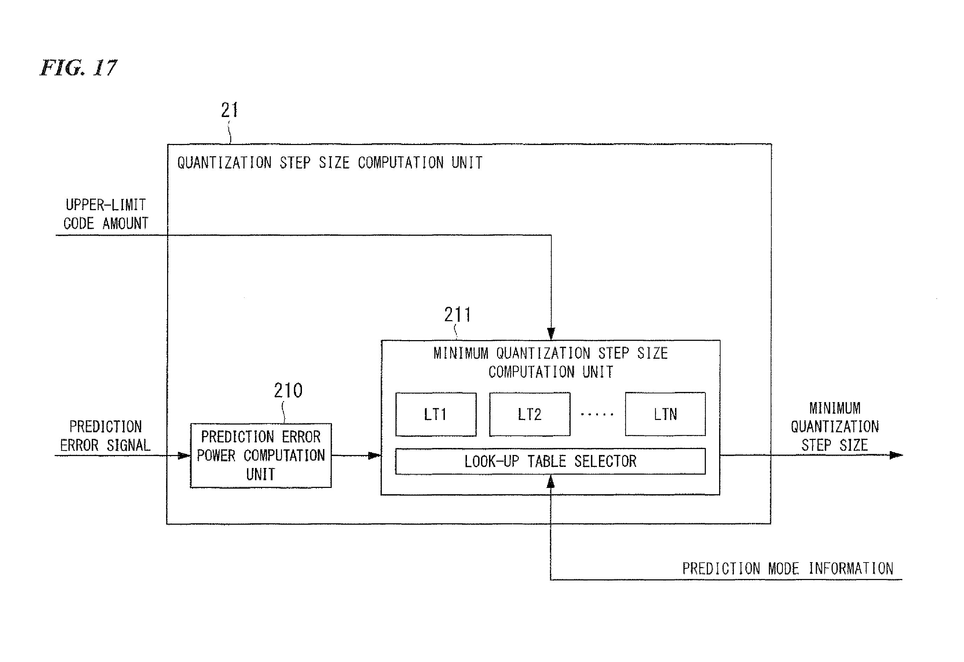

In another preferable example shown in Fig. 17, the minimum quantization step size computation unit 211 shown in Fig. 3 has a plurality of look-up tables (LT1 to LTN) corresponding to a plurality of prediction modes, and one of the look-up tables which is suitable for the prediction mode of the encoding target macroblock is selected and used.

INDUSTRIAL APPLICABILITY

The present invention can be applied to a video encoding apparatus for applying orthogonal transformation to a prediction error signal between a video signal of an encoding target area and a predicted signal for the video signal, and quantizing an obtained orthogonal transformation coefficient by using a quantization step size so as to encode the coefficient. The present invention does not require re-encoding or encoding which handles two or more encoding modes and can implement encoding which generates codes less than an upper limit amount of code, without awaiting a measured result of the amount of generated code.

**Claims**

1. A video encoding apparatus for applying orthogonal transformation to a prediction error signal between a video signal of an encoding target area and a predicted signal for the video signal, and quantizing an obtained orthogonal transformation coefficient by using a preset quantization step size so as to encode the coefficient, the apparatus comprising:

   a computation device that computes a prediction error power which is a power of the prediction error signal;
   a determination device that receives the prediction error power computed by the computation device, the preset quantization step size, and an upper limit of an amount of code generated for the encoding target area, and determines whether or not an amount of code generated when performing quantization using the preset quantization step size exceeds the upper limit; and
   a change device that changes an encoding process based on a result of the determination by the determination device.

2. The video encoding apparatus in accordance with claim 1, wherein:

   the determination device estimates, based on the prediction error power and the preset quantization step size, an amount of code generated when performing the quantization using the preset quantization step size, and compares the estimated amount with the upper limit so as to determine whether or not the amount of code generated when performing the quantization using the preset quantization step size exceeds the upper limit.

**3.** The video encoding apparatus in accordance with claim 1, wherein:

the determination device computes a permissive power for the prediction error power based on the upper limit and the preset quantization step size, and compares the permissive power with the prediction error power so as to determine whether or not the amount of code generated when performing the quantization using the preset quantization step size exceeds the upper limit.

**4.** The video encoding apparatus in accordance with claim 2, wherein:

the determination device estimates the amount of code generated when performing the quantization using the preset quantization step size, by setting variables of a function, which are the prediction error power and the quantization step size, to the values of the prediction error power and the quantization step size, where the value of the function is the relevant amount of generated code.

**5.** The video encoding apparatus in accordance with claim 2, wherein:

the determination device estimates the amount of code generated when performing the quantization using the preset quantization step size, by referring to a table in which a relationship between data values of the prediction error power, the quantization step size, and the relevant amount of generated code is defined.

**6.** The video encoding apparatus in accordance with claim 3, wherein:

the determination device computes the permissive power for the prediction error power by setting variables of a function, which are the upper limit and the quantization step size, to the values of the upper limit and the quantization step size, where the value of the function is the permissive power.

**7.** The video encoding apparatus in accordance with claim 3, wherein:

the determination device computes the permissive power for the prediction error power by referring to a table in which a relationship between data values of the upper limit, the quantization step size, and the permissive power is defined.

**8.** The video encoding apparatus in accordance with claim 4 or 6, wherein:

the determination device performs switching of the function in accordance with an encoding mode of the encoding target area.

**9.** The video encoding apparatus in accordance with claim 5 or 7, wherein:

the determination device performs switching of the table in accordance with an encoding mode of the encoding target area.

**10.** The video encoding apparatus in accordance with claim 1, wherein:

if the determination device determines that the amount of code generated when performing quantization using the preset quantization step size exceeds the upper limit, the change device does not encode a quantized value of the orthogonal transformation coefficient, but encodes the video signal without quantizing the video signal.

**11.** The video encoding apparatus in accordance with claim 1, wherein:

if the determination device determines that the amount of code generated when performing quantization using the preset quantization step size exceeds the upper limit, the change device obtains a quantization step size, which is computed based on the prediction error power and the upper limit and implements generation of the amount of code which does not exceed the upper limit, and switches the quantization step size from the preset quantization step size to the obtained quantization step size.

**12.** The video encoding apparatus in accordance with claim 11, wherein:

the change device computes the quantization step size which implements generation of the amount of code which does not exceed the upper limit, by setting variables of a function, which are the prediction error power and the upper limit, to the values of the prediction error power and the upper limit, where the value of the function is the relevant quantization step size.

**13.** The video encoding apparatus in accordance with claim 11, wherein:

the change device computes the quantization step size which implements generation of the amount of code which does not exceed the upper limit, by referring to a table in which a relationship between data values of the prediction error power, the upper limit, and the relevant quantization step size is defined.

14. The video encoding apparatus in accordance with claim 12, wherein:

the change device performs switching of the function in accordance with an encoding mode of the encoding target area.

15. The video encoding apparatus in accordance with claim 13, wherein:

the change device performs switching of the table in accordance with an encoding mode of the encoding target area.

16. A video encoding method for applying orthogonal transformation to a prediction error signal between a video signal of an encoding target area and a predicted signal for the video signal, and quantizing an obtained orthogonal transformation coefficient by using a preset quantization step size so as to encode the coefficient, the method comprising:

a computation step that computes a prediction error power which is a power of the prediction error signal;
a determination step that receives the computed prediction error power, the preset quantization step size, and an upper limit of an amount of code generated for the encoding target area, and determines whether or not an amount of code generated when performing quantization using the preset quantization step size exceeds the upper limit; and
a change step that changes an encoding process based on a result of the determination.

17. The video encoding method in accordance with claim 16, wherein:

the determination step estimates, based on the prediction error power and the preset quantization step size, an amount of code generated when performing the quantization using the preset quantization step size, and compares the estimated amount with the upper limit so as to determine whether or not the amount of code generated when performing the quantization using the preset quantization step size exceeds the upper limit.

18. The video encoding method in accordance with claim 16, wherein:

the determination step computes a permissive power for the prediction error power based on the upper limit and the preset quantization step size, and compares the permissive power with the prediction error power so as to determine whether or not the amount of code generated when performing the quantization using the preset quantization step size exceeds the upper limit.

19. A video encoding program by which a computer executes an operation for implementing the video encoding apparatus in accordance with claim 1.

20. A computer-readable storage medium which stores a video encoding program by which a computer executes an operation for implementing the video encoding apparatus in accordance with claim 1.

FIG. 1

EP 2 169 962 A1

## FIG. 2

20

CODE AMOUNT ESTIMATOR

UPPER-LIMIT
CODE AMOUNT

202

CODE AMOUNT
COMPARATOR

SWITCHING SIGNAL

PREDICTION
ERROR SIGNAL

200

PREDICTION ERROR
POWER COMPUTATION
UNIT

201

GENERATED CODE
AMOUNT ESTIMATOR

QUANTIZATION
STEP SIZE

## FIG. 3

21

QUANTIZATION STEP SIZE COMPUTATION UNIT

UPPER-LIMIT
CODE AMOUNT

PREDICTION
ERROR SIGNAL

210

PREDICTION ERROR
POWER COMPUTATION
UNIT

211

MINIMUM QUANTIZATION
STEP SIZE COMPUTATION
UNIT

MINIMUM
QUANTIZATION
STEP SIZE

*FIG. 4*

START

↓

DETERMINE ENCODING MODE — S10

↓

ESTIMATE AMOUNT OF GENERATED CODE — S11

↓

S12

ESTIMATED VALUE > UPPER LIMIT ?

No →

Yes ↓

CHANGE QUANTIZATION STEP SIZE — S13

↓

PERFORM ENCODING — S14

↓

END

14

*FIG. 5A*

```
                    ┌─────────┐
                    │  START  │
                    └─────────┘
                         │
                         ▼
   ┌──────────────────────────────────────────┐
   │  RECEIVE PREDICTION ERROR SIGNAL AND      │──── S110
   │  COMPUTE PREDICTION ERROR POWER           │
   └──────────────────────────────────────────┘
                         │
                         ▼
   ┌──────────────────────────────────────────┐
   │  RECEIVE QUANTIZATION STEP SIZE           │──── S111
   └──────────────────────────────────────────┘
                         │
                         ▼
   ┌──────────────────────────────────────────┐
   │  ESTIMATE AMOUNT OF GENERATED CODE        │
   │  BASED ON THE PREDICTION ERROR POWER      │──── S112
   │  AND THE QUANTIZATION STEP SIZE           │
   └──────────────────────────────────────────┘
                         │
                         ▼
                    ┌─────────┐
                    │   END   │
                    └─────────┘
```

*FIG. 5B*

```
                    ┌─────────┐
                    │  START  │
                    └─────────┘
                         │
                         ▼
   ┌──────────────────────────────────────────┐
   │  RECEIVE UPPER LIMIT AMOUNT OF CODE       │──── S130
   └──────────────────────────────────────────┘
                         │
                         ▼
   ┌──────────────────────────────────────────┐
   │  RECEIVE PREDICTION ERROR SIGNAL AND      │──── S131
   │  COMPUTE PREDICTION ERROR POWER           │
   └──────────────────────────────────────────┘
                         │
                         ▼
   ┌──────────────────────────────────────────┐
   │  COMPUTE QUANTIZATION STEP SIZE BASED     │
   │  ON THE UPPER LIMIT AMOUNT OF CODE AND    │──── S132
   │  THE PREDICTION ERROR POWER               │
   └──────────────────────────────────────────┘
                         │
                         ▼
   ┌──────────────────────────────────────────┐
   │  CHANGE QUANTIZATION STEP SIZE            │──── S133
   └──────────────────────────────────────────┘
                         │
                         ▼
                    ┌─────────┐
                    │   END   │
                    └─────────┘
```

*FIG. 6*

20

CODE AMOUNT ESTIMATOR

PREDICTION ERROR
SIGNAL

200

PREDICTION ERROR
POWER COMPUTATION
UNIT

204

PREDICTION ERROR
COMPARATOR

SWITCHING
SIGNAL

UPPER-LIMIT
CODE AMOUNT

203

PERMISSIVE PREDICTION
ERROR POWER COMPUTATION
UNIT

QUANTIZATION
STEP SIZE

*FIG. 7*

START

DETERMINE ENCODING MODE ── S20

COMPUTE PERMISSIVE PREDICTION ERROR POWER ── S21

PREDICTION ERROR POWER
>
PERMISSIVE PREDICTION ERROR POWER
? ── S22

No

Yes

CHANGE QUANTIZATION STEP SIZE ── S23

PERFORM ENCODING ── S24

END

*FIG. 8A*

START

RECEIVE PREDICTION ERROR SIGNAL AND COMPUTE PREDICTION ERROR POWER — S210

RECEIVE UPPER LIMIT AMOUNT OF CODE — S211

RECEIVE QUANTIZATION STEP SIZE — S212

COMPUTE PERMISSIVE PREDICTION ERROR POWER BASED ON THE UPPER LIMIT AMOUNT OF CODE AND THE QUANTIZATION STEP SIZE — S213

END

*FIG. 8B*

START

RECEIVE UPPER LIMIT AMOUNT OF CODE — S230

RECEIVE PREDICTION ERROR SIGNAL AND COMPUTE PREDICTION ERROR POWER — S231

COMPUTE QUANTIZATION STEP SIZE BASED ON THE UPPER LIMIT AMOUNT OF CODE AND THE PREDICTION ERROR POWER — S232

CHANGE QUANTIZATION STEP SIZE — S233

END

FIG. 9

Video encoder block diagram (labels):

- PCM ENCODER (31)
- CODE AMOUNT ESTIMATOR (30)
- QUANTIZATION CONTROLLER (109)
- INFORMATION SOURCE ENCODER (114)
- ORTHOGONAL TRANSFORMER (107)
- QUANTIZER (108)
- INVERSE QUANTIZER (110)
- INVERSE ORTHOGONAL TRANSFORMER (111)
- INTRAFRAME PREDICTION MODE DETERMINATION UNIT (104)
- INTERFRAME PREDICTION MODE DETERMINATION UNIT (103)
- LOOP FILTER (113)
- FRAME MEMORY (102)
- MOTION COMPENSATOR (101)
- MOTION DETECTOR (100)
- (112), (106), (105), (32), (10)

Signal labels:
- BIT RATE
- AMOUNT OF GENERATED CODE
- QUANTIZATION STEP SIZE
- SWITCHING SIGNAL
- PREDICTION ERROR SIGNAL
- INTRAFRAME PREDICTED SIGNAL
- INTERFRAME PREDICTED SIGNAL
- PREDICTED SIGNAL
- INTRAFRAME PREDICTION MODE
- INTERFRAME PREDICTION MODE / MOTION VECTOR
- DECODED SIGNAL
- MOTION VECTOR
- UPPER-LIMIT CODE AMOUNT
- VIDEO SIGNAL

18

*FIG. 10*

START

DETERMINE ENCODING MODE — S30

ESTIMATE AMOUNT OF GENERATED CODE — S31

S32

ESTIMATED VALUE > UPPER LIMIT ?

No

Yes

EXECUTE PCM ENCODING — S33

END

EXECUTE ORDINARY ENCODING — S34

END

*FIG. 11*

START

DETERMINE ENCODING MODE — S40

COMPUTE PERMISSIVE PREDICTION ERROR POWER — S41

S42

PREDICTION ERROR POWER > PERMISSIVE PREDICTION ERROR POWER ?

No

Yes

EXECUTE PCM ENCODING — S43

END

EXECUTE ORDINARY ENCODING — S44

END

19

*FIG. 12*

CODE AMOUNT ESTIMATOR — 20

UPPER-LIMIT CODE AMOUNT

CODE AMOUNT COMPARATOR — 202

SWITCHING SIGNAL

ESTIMATED AMOUNT OF CODE

GENERATED CODE AMOUNT ESTIMATOR — 201

FUNCTION 1 | FUNCTION 2 | . . . . . | FUNCTION N

FUNCTION SELECTOR

PREDICTION ERROR SIGNAL

PREDICTION ERROR POWER COMPUTATION UNIT — 200

QUANTIZATION STEP SIZE

PREDICTION MODE INFORMATION

EP 2 169 962 A1

*FIG. 13*

CODE AMOUNT ESTIMATOR — 20

UPPER-LIMIT CODE AMOUNT

CODE AMOUNT COMPARATOR — 202

SWITCHING SIGNAL

ESTIMATED AMOUNT OF CODE

GENERATED CODE AMOUNT ESTIMATOR — 201

LT1    LT2    · · · · ·    LTN

LOOK-UP TABLE SELECTOR

PREDICTION ERROR SIGNAL

PREDICTION ERROR POWER COMPUTATION UNIT — 200

QUANTIZATION STEP SIZE

PREDICTION MODE INFORMATION

EP 2 169 962 A1

*FIG. 14*

CODE AMOUNT ESTIMATOR — 20

PREDICTION ERROR SIGNAL → PREDICTION ERROR POWER COMPUTATION UNIT (200) → PREDICTION ERROR COMPARATOR (204) → SWITCHING SIGNAL

PERMISSIVE PREDICTION ERROR POWER

PERMISSIVE PREDICTION ERROR POWER COMPUTATION UNIT (203)

FUNCTION 1 | FUNCTION 2 | ..... | FUNCTION N

FUNCTION SELECTOR

UPPER-LIMIT CODE AMOUNT →

QUANTIZATION STEP SIZE

PREDICTION MODE INFORMATION

*FIG. 15*

CODE AMOUNT ESTIMATOR — 20

PREDICTION ERROR SIGNAL

200
PREDICTION ERROR POWER COMPUTATION UNIT

204
PREDICTION ERROR COMPARATOR

SWITCHING SIGNAL

PERMISSIVE PREDICTION ERROR POWER

203
PERMISSIVE PREDICTION ERROR POWER COMPUTATION UNIT

LT1    LT2   · · · · ·   LTN

LOOK-UP TABLE SELECTOR

UPPER-LIMIT CODE AMOUNT

QUANTIZATION STEP SIZE

PREDICTION MODE INFORMATION

FIG. 16

*FIG. 17*

QUANTIZATION STEP SIZE COMPUTATION UNIT — 21

UPPER-LIMIT CODE AMOUNT

MINIMUM QUANTIZATION STEP SIZE COMPUTATION UNIT — 211

| LT1 | LT2 | ..... | LTN |

LOOK-UP TABLE SELECTOR

PREDICTION ERROR SIGNAL

PREDICTION ERROR POWER COMPUTATION UNIT — 210

MINIMUM QUANTIZATION STEP SIZE

PREDICTION MODE INFORMATION

EP 2 169 962 A1

*FIG. 18*

```
                    ┌─────────────┐
                    │    START    │
                    └──────┬──────┘
                           │
            ┌──────────────▼──────────────┐
            │   DETERMINE ENCODING MODE    │
            └──────────────┬──────────────┘
                           │
            ┌──────────────▼──────────────┐
            │      EXECUTE ENCODING        │
            └──────────────┬──────────────┘
                           │
            ┌──────────────▼──────────────┐
            │ MEASURE AMOUNT OF GENERATED CODE │
            └──────────────┬──────────────┘
                           │
        No        ◇────────▼────────◇
      ◄──────────  MEASURED VALUE > UPPER LIMIT?
      │            ◇─────────────────◇
      │                     │ Yes
      │            ┌─────────▼─────────┐
      │            │ RE-ENCODING IN PCM MODE │
      │            └─────────┬─────────┘
      │                      │
      └──────────────────────┤
                             │
                    ┌────────▼────────┐
                    │      END        │
                    └─────────────────┘
```

**INTERNATIONAL SEARCH REPORT**

| International application No. |
|---|
| PCT/JP2008/062484 |

| A.    CLASSIFICATION OF SUBJECT MATTER |
|---|
| *H04N7/50*(2006.01)i |

According to International Patent Classification (IPC) or to both national classification and IPC

| B.    FIELDS SEARCHED |
|---|

Minimum documentation searched (classification system followed by classification symbols)
H04N7/24-68

Documentation searched other than minimum documentation to the extent that such documents are included in the fields searched
Jitsuyo Shinan Koho         1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

| C.    DOCUMENTS CONSIDERED TO BE RELEVANT | | |
|---|---|---|
| Category* | Citation of document, with indication, where appropriate, of the relevant passages | Relevant to claim No. |
| X<br>Y<br>A | JP 2007-158430 A  (Matsushita Electric Industrial Co., Ltd.),<br>21 June, 2007 (21.06.07),<br>Par. Nos. [0015], [0022], [0030]<br>(Family: none) | 1,2,4,5,16,<br>17,19,20<br>8,9,10-15<br>3,6,7,18 |
| Y | JP 2005-86249 A  (Toshiba Corp.),<br>31 March, 2005 (31.03.05),<br>Par. Nos. [0041] to [0044]<br>(Family: none) | 8,9 |
| Y | JP 2007-166039 A  (Matsushita Electric Industrial Co., Ltd.),<br>28 June, 2007 (28.06.07),<br>Par. Nos. [0021] to [0043]<br>& US 2007/0133892 A1    & CN 1980393 A | 10 |

☒  Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>     16 September, 2008 (16.09.08) | Date of mailing of the international search report<br>     22 September, 2008 (22.09.08) |
|---|---|
| Name and mailing address of the ISA/<br>     Japanese Patent Office | Authorized officer |
| Facsimile No. | Telephone No. |

Form PCT/ISA/210 (second sheet) (April 2007)

**INTERNATIONAL SEARCH REPORT**

| | International application No. |
|---|---|
| | PCT/JP2008/062484 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 11-331850 A  (Mitsubishi Electric Corp.),<br>30 November, 1999 (30.11.99),<br>Par. Nos. [0049] to [0053], [0076]<br>& US 2002/0136297 A1    & GB 2335560 A<br>& FR 2776159 A          & TW 501022 B | 11-15 |

Form PCT/ISA/210 (continuation of second sheet) (April 2007)

**EP 2 169 962 A1**

## INTERNATIONAL SEARCH REPORT

| International application No. |
| --- |
| PCT/JP2008/062484 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

```
    This international application includes four groups of inventions which
do not satisfy the requirement of unity of invention.
    First group of inventions: claims 1, 2, 4, 5, ,8, 9, 16, 17, 19, 20 (as
for claims 8, 9, the portions referring to claim 4 or 5)
    Second group of inventions: claims 3, 6-9, 18 (as for claims 8, 9, the
portions referring to claim 6 or 7)

    (Continued to extra sheet)
```

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.  Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

International application No.

PCT/JP2008/062484

Continuation of Box No.III of continuation of first sheet(2)

Third group of inventions: claim 10
Fourth group of inventions: claims 11-15

The technical feature common to the aforementioned four groups of inventions cannot be a special technical feature since it is disclosed in Document JP 2007-158430 A (Matsushita Electric Industrial Co., Ltd.), 21 June 2007 (21.06.07), paragraphs [0010]-[0037] (especially paragraphs [0015], [0022], [0030]).

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007185374 A

### Non-patent literature cited in the description

- Advanced video coding for generic audio visual services. *ITU-T Rec.H.264,* 2003, 249-256

- **Keiichi Chono ; Yuzo Senda ; Yoshihiro Miyamoto.** A PCM coding method using decoded images for obeying the upper limit on the number of bits of MB in H.264 encoding. *PCSJ2006,* 2006, 119-120